Europäisches Patentamt

European Patent Office

Office européen des brevets

(11) Publication number: **0 339 765**
**A2**

## (12) EUROPEAN PATENT APPLICATION

(21) Application number: **89301685.7**

(22) Date of filing: **22.02.89**

(51) Int. Cl.⁴: **G11B 15/675 , H02K 21/22**

(30) Priority: **25.03.88 US 173619**

(43) Date of publication of application:
**02.11.89 Bulletin 89/44**

(84) Designated Contracting States:
**DE FR GB**

(71) Applicant: **RIGIDYNE CORPORATION**
**2655 Park Center Drive**
**Simi Valley California 93065(US)**

(72) Inventor: **Krum, Richard Gene**
**688 Oak Shadow View Place**
**Thousand Oask California 91320(US)**
Inventor: **Milanes, Eddy Juan**
**4243 Roxbury Street**
**Simi Valley California 93063(US)**
Inventor: **Moir, Michael Bruce**
**3337 Prairie Court**
**Newbury Park California 91320(US)**

(74) Representative: **Caro, William Egerton et al**
**J. MILLER & CO. Lincoln House 296-302 High**
**Holborn**
**London WC1V 7JH(GB)**

(54) **Disk drive spindle motor.**

(57) A disk drive spindle motor for rotatably driving a plurality of memory storage disks (14) or the like, comprises a stator shaft (32), an armature (74,76) carried by the stator shaft and having a plurality of alternate armature poles, a rotor hub (54), and bearing units (40,42) for rotatably supporting a rotor hub from the stator shaft. A permanent magnet sleeve (80) is carried by the rotor hub (54) in magnetic coupled relation with the armature (74, 76). The sleeve has a one piece configuration including a plurality of circumferentially arranged alternate magnetic sleeve poles, whereby the permanent magnet sleeve (80) and the hub (54) are rotatably driven upon supply of electric power to the armature (74,76).

FIG. 3

## DISK DRIVE SPINDLE MOTOR

This invention relates to disk drive spindle motors for use in computer disk drives and the like for rotatably driving one or more memory storage disks.

In recent years, micro-computer equipment, such as so-called personal or desk top computers, have become extremely popular for a wide variety of business, educational and other uses. Such computers commonly include a main central processor unit having one or more memory storage disks for storage of data. In many modern computers, the storage disk or disks, sometimes referred to as "hard disks" are provided as part of a Winchester-type disk drive unit having the storage disks supported in a stack on a rotary spindle within a substantially sealed disk drive housing. The disks are rotatably driven in unison by a small spindle motor, and one or more electro-magnetic heads on a movable positioning arm are displaced by a precision stepper motor to traverse surfaces of the rotating disks for purposes of reading and writing data. Such Winchester-type disk drive units are generally preferred in comparison with so-called floppy type disk drives due to their higher memory storage capacities and faster operating speeds.

With the steady increasing popularity of personal computers, various standard computer components have evolved to accommodate installation into computers produced by different manufacturers and/or to ensure compatibility with commercially available software. In this regard, Winchester-type disk drive units having one or more memory storage disks of an approximate 133 mm (5.25 inch) diameter have been manufactured and used on an industry-wide basis. More recently, smaller and lighter Winchester-type disk drives having storage disks of about 89 mm (3.50 inch) in diameter have become available. For either diametric size, the disk drive units have been produced in standardised vertical profile sizes to permit installation into a computer as an original equipment item, or as an after market item to replace or up-grade an original disk drive unit. Specifically, disk drive units have been manufactured with a vertical dimension of about 83 mm (3.25 inch) to fit within a so-called "full height" vertical spacing, or with a vertical dimension of about 41 mm (1.625 inch) to fit within a so-called "half height" profile.

For any specific disk drive unit, the total memory storage capacity is related in large degree to the number of disks mounted within the disk drive housing. However, particularly for low profile "half height" disk drive units, the number of storage disks which will fit within the available space together with the required spindle motor is extremely limited. In this regard, disk drive spindle motors have traditionally been mounted in an under-slung geometry positioned within the disk drive housing immediately below the storage disk or disks. Such under-slung spindle motors have provided adequate drive torque to ensure rapid disk rotational start up and to achieve the desired high speed disk operation typically at about 3,000 to 3,600 rpm. However, these under-slung spindle motors occupy a significant portion of the vertical profile of the disk drive unit, and thereby further restrict the number of disks which can be used. Alternative spindle motors have been proposed wherein a compact motor is incorporated directly into the spindle hub of the disk drive, thereby freeing vertical space to be occupied with additional storage disks. However, such in-hub spindle motors have generally suffered from inadequate drive torque which has precluded their use with an optimised stack of storage disks.

There exists, therefore, a significant need for improvements in spindle motors of the type used in computer disk drive units, wherein the spindle motor is designed for in-hub mounting while providing sufficient drive torque for rotatably driving a maximum plurality of storage disks. The present invention seeks to fulfill these needs and to provide further related advantages.

According to one aspect of the present invention, there is provided a disk drive spindle motor for rotatably driving a plurality of memory storage disks or the like, said spindle motor comprising: a stator shaft; an armature carried by said stator shaft and having a plurality of alternate armature poles; a rotor hub; and means for rotatably supporting said rotor hub from said stator shaft, characterised by a permanent magnet sleeve carried by said rotor hub in magnetic coupled relation with said armature, said sleeve having a one piece configuration including a plurality of circumferentially arranged alternate magnetic sleeve poles, whereby said permanent magnet sleeve and said hub are rotatably driven upon supply of electric power to said armature. Preferably the number of armature poles is mis-matched relative to the number of said sleeve poles.

According to another aspect of the present invention there is provided a spindle motor comprising: a stator shaft; an armature carried by said stator shaft and defining a plurality of armature poles; a generally cylindrical rotor hub formed from a magnetic flux carrying material; and means for rotatably mounting said rotor hub about said stator shaft characterised by a permanent magnet sleeve carried within said rotor hub, said permanent magnet sleeve having a one-piece construction and defining a circumferentially arranged plurality of alternate poles, said poles being provided in a number mis-matched with respect to the number of armature poles. The spindle motor may include a disk drive housing having upper and lower housing portions, and means for securing said stator shaft substantially at opposite ends thereof respectively to said upper and lower housing portions.

According to a further aspect of the present invention there is provided a disk drive spindle motor characterised by comprising a generally sealed disk drive housing having inter-connected first and second housing members; a stator shaft having opposite ends secured respectively to said first and second housing members; an armature carried by said stator shaft and defining a plurality of armature poles; a rotor hub having a substantially cylindrical shape and being mounted about said armature; means for rotatably supporting said rotor hub for rotation relative to said stator shaft; and a permanent magnet sleeve having a unitary construction and defining a plurality of circumferentially arranged alternate magnet sleeve poles, said permanent magnet sleeve being mounted within said rotor hub and carried for rotation therewith; in combination with a plurality of memory storage disks each having a central opening formed therein and mounted about said rotor hub, and spacer ring means for axially separating said disks in spaced relation in a stack about said rotor hub.

The spindle motor may include a plurality of axially extending shim strips carried in circumferentially spaced relation about said rotor hub, said shim strips, in operation, maintaining inner diameter edges of central openings formed in said disks in spaced relation from said rotor hub. Said shim strips may be formed from polytetrafluoroethylene. At least three of the shim strips may be provided about said rotor hub in a generally equi-angularly spaced array.

Said rotor hub may include means for supporting a plurality of the memory storage disks in stacked relation.

Said rotor hub may be formed from a magnetic flux carrying material, e.g. a rare earth magnet material such as samarium cobalt.

In a preferred embodiment the number of said armature poles is nine, and the number of sleeve poles is eight.

Said poles of said permanent magnet sleeve may be separated by transition bands of smoothly changing polarity, each of said transition bands having a band width of at least about 5°.

The spindle motor preferably includes Hall-effect switch means carried by said stator shaft substantially at one end of said armature and at a position substantially radially within one end of said permanent magnet sleeve, the flux concentrator ring carried by said stator shaft at a position adjacent said armature in magnetically coupled relation with said Hall-effect switch means.

In one embodiment said means for rotatably supporting said rotor hub comprises a pair of bearing units having inner races bonded to said stator shaft substantially at opposite ends thereof, a respective pair of outer races secured to said rotor hub, and bearing members for respectively rotably supporting said outer races relative to said inner races.

Said rotor hub may include a radially enlarged support flange at one end thereof, and a clamp member mounted generally to an opposite end of said rotor hub and co-operating with said spacer ring means and said disks and said support flange to maintain said disks in aligned stacked relation.

According to a yet further aspect of the present invention there is provided a spindle motor for a computer disk drive or the like, comprising: a rotor hub; and drive means within said rotor hub for rotatably driving said rotor hub; characterised by a plurality of at least three axially extending shim strips mounted onto the exterior of said rotor hub in circumferentially spaced relation, said shim strips being formed from a relatively soft material, and means for supporting at least one memory storage disk having a central opening therein about said rotor hub for rotation therewith, said shim strips maintaining the inner diameter edge of said at least one disk in spaced relation with said rotor hub.

The invention is illustrated, merely by way of example, in the accompanying drawings, in which:-

Figure 1 is a top plan view of a computer disk drive unit incorporating a disk drive spindle motor according to the present invention;

Figure 2 is a fragmented vertical sectional view depicting the spindle motor of Figure 1 rotatably supporting a stack of memory storage disks in operative relation with a head position assembly;

Figure 3 is an enlarged vertical sectional view taken generally on the line 3 - 3 of Figure 2;

Figure 4 is a horizontal sectional view taken generally on the line 4 - 4 of Figure 3;

Figure 5 is a fragmented perspective view showing a permanent magnet sleeve for use in the spindle motor of Figure 3; and

Figure 6 is a chart depicting magnetisation characteristics of the permanent magnet sleeve of Figure 5.

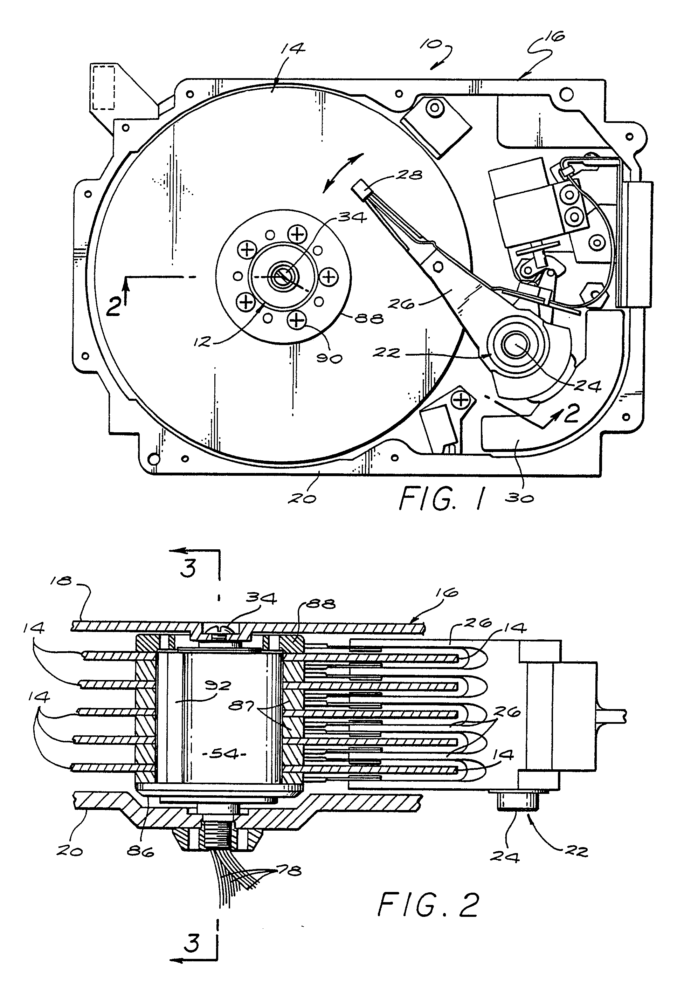

As shown in Figure 1 of the drawings, a computer disk drive unit 10 includes a disk drive spindle motor 12 according to the present invention for rotatably driving a stack of memory storage disks 14 in a personal computer or the like. The spindle motor 12 is integrated directly into a spindle hub of the stack of disks 14 and is designed to provide relatively smooth, low vibration and low cogging rotational driving of the disks 14. Importantly, the spindle motor 12 provides sufficient driving torque to rotate a substantially maximum number of disks 14 which can be arranged to fit within the vertical profile available to the disk drive unit 10.

As shown generally in Figures 1 and 2, the disk drive unit 10 comprises a so-called "hard" disk drive of the general type used in modern personal computers and the like. The disk drive unit 10 conventionally includes a substantially sealed housing 16 defined by inter-connected, generally shell-shaped upper and lower housing members 18,20. The housing 16 has an overall size and shape with generally standardised external dimensions selected to fit within a limited installation envelope within a cabinet (not shown) for a central processor unit of a computer. For example, the storage disks 14 having standard diametric sizes of about 133 mm (5.25 inch) and about 89 mm (3.50 inch) are known for use in disk drives having a vertical profile sized to fit within a full height dimension of about 83 mm (3.25 inch) or within a half height dimension of about 41 mm (1.625 inch). In accordance with a preferred disk drive geometry utilising a spindle motor according to the present invention, up to five storage disks 14 have been incorporated into a disk drive unit of half height dimension, thereby providing a substantially maximised data storage capacity within an extremely small envelope size.

As is generally known, the disk drive unit 10 includes a head positioner assembly 22 mounted within the sealed housing 16 at a position along side the stack of disks. The head positioner assembly 22 is movably supported within the housing by means of a bearing 24 and supports a plurality of individual arms 26 having electro-magnetic heads 28 at the distal ends thereof in close proximity with respective upper and lower surfaces on the disks 14. A stepper motor 30 and a corresponding motor controller (not shown) function to displace the heads 28 to generally radial traverses relative to the disks 14 for purposes of reading and writing data, in known manner.

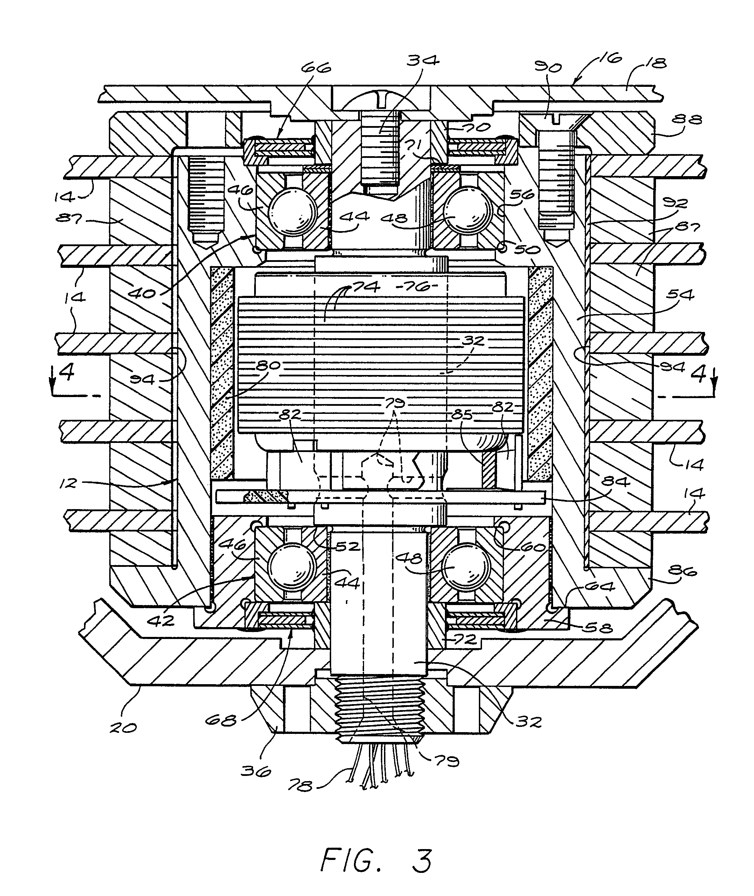

As best shown in Figures 2 and 3, the spindle motor 12 is securely mounted within a central hub region of the stack of disks 14 in a position extending between the upper and lower housing members 18, 20 of the housing 16. More specifically, the spindle motor 12 comprises a central stator shaft 32 formed from, for example, stainless steel to extend between the upper and lower housing members 18, 20. For enhanced stiffness to avoid the occurrence of natural resonance frequencies within a normal operating range for the motor, the stator shaft 32 is anchored to the upper and lower housing members. Such anchoring is shown in Figures 2 and 3 which depict a screw 34 fastened to the upper housing member 18 into a threaded bore at the upper end of the stator shaft 32, and a threaded nut 36 fastened onto a threaded lower end of the stator shaft which projects downwardly through an opening in the lower housing member 20.

The stator shaft 32 is formed by, for example, machining to accommodate predetermined positional mounting of upper and lower bearing units 40, 42. More specifically, the two bearing units 40, 42 comprise a pair of precision ball bearing units each having an annular inner race 44 co-operating with an annular outer race 46 to contain an annular array of bearing balls 48 therebetween. The upper bearing unit 40 is pressed into a relatively small diameter upper end of the stator shaft 32. Similarly, the lower bearing unit 42 is pressed onto a relatively small diameter lower end of the stator shaft 32 towards a position with its inner race 44 seated against an axially downwardly presented shoulder stop 52 on the stator shaft. Both the inner races 44 are preferably secured by bonding onto their respective regions of the stator shaft such that the inner races effectively combine with the stator shaft to increase the overall stiffness of the motor. In combination with the stator shaft anchoring at opposite ends to the housing, this arrangement effectively precludes the occurrence of a natural resonant frequency at a normal operating speed of about 3,600 rpm.

The outer races 46 of the two bearing units 40, 42 rotatably support a generally cylindrical rotor hub 54 constituting the rotor of the spindle motor 12. As shown in Figure 3, the outer race 46 of the upper bearing unit 40 is secured directly within an upper bore 56 of the rotor hub in seated relation against an inwardly radiating shoulder stop 50. The lower bearing unit 42, however, has its outer race 46 seated within an annular cap ring 58 which, in turn, is seated within the open lower end of the rotor hub 54. An inner shoulder stop 60 within the cap ring 58 serves as an alignment stop for the outer bearing race 46, and an outer shoulder stop 64 on the cap ring 58 engages the axially lower end of the rotor hub 54 to position the cap ring in the desired axial position. For optimum assembly, the outer races of the bearing units as well as the exterior diameter of the cap ring 58, are secured in place by bonding, in a manner similar to the previously described bonding of the inner races 44 to the stator shaft 32.

The rotary interfaces between the stator shaft 32 and the rotor hub 54 are sealed to prevent migration of bearing contaminants or the like into contact with the disks 14. Although the specific structure of the requisite sealing means may vary, ferrofluidic seal units 66, 68 of the type available from Ferrofluidics Corporation, Nashua, New Hampshire, are preferred. Such seal units as shown mounted respectively at the upper and lower ends of the rotor hub 54 and define radially inwardly presented ferrofluidic seal faces in running engagement with aligned seal rings 70, 72 on the stator shaft 32. A pair of Belleville washer springs 71 are provided to react between the upper seal ring 70 and the inner race of the upper bearing unit 40 to ensure axial retention of the bearing unit, whereas the lower seal ring 72 conveniently functions in addition as a thrust member reacting between the inboard face of the lower housing member 20 and the adjacent end of the inner race 44 of the lower bearing member 42.

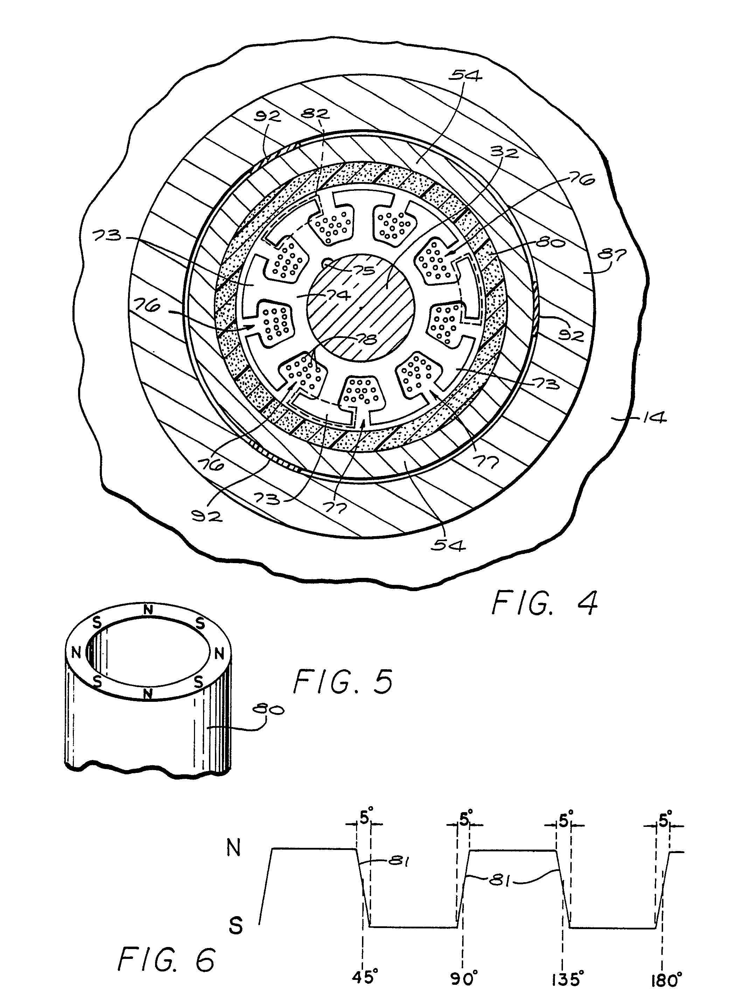

The stator shaft 32 carries a stacked plurality of generally ring shaped armature laminations 74 which support armature windings 76 for the spindle motor. More particularly, as viewed best in Figures 3 and 4, these armature laminations 74 are received in stacked relation about the stator shaft 32 in appropriate vertical alignment with each other and in a predetermined rotational position relative to the stator shaft 32. In this regard, the laminations may include inner notches 75 (Figure 4) which assist in ensuring the desired lamination alignment. The laminations 74 are preferably formed from a soft magnetic steel and are mounted onto the stator shaft 32 as by an interference fit which may be facilitated by the use of axially elongated serrations (not shown) on the stator shaft. As a stacked group, the armature laminations 74 define a plurality of radially outwardly extending teeth or poles 73 separated by a corresponding plurality of radially outwardly open, equi-angularly arranged slots 77. As is known in the art, the stacked laminations 74 are coated with a suitable epoxy prior to winding of the armature windings 76 within the slots 77 to form the armature for the motor. Figure 4 shows a total of nine armature poles 73, thereby providing a total of three armature poles for each phase of the motor during standard three phase operation, as will be described in more detail. Conductors 78 forming the various windings are coupled through passages 79 to the lower end of the stator shaft 32 (Figures 2 and 3) for passage to the under side of the housing 16 and appropriate connection thereat to associated control circuitry (not shown) for controlling motor operation.

The thus wound armature of the spindle motor 12 is positioned concentrically within a cylindrical permanent magnet sleeve 80 (Figure 3) which is mounted by press fitting and/or by bonding into the interior of the rotor hub 54. This permanent magnet sleeve 80 is formed as a one piece or unitary component, as shown best in Figure 5, and from a high energy magnet material such as a rare earth magnet material. The preferred permanent magnet material comprises a samarium cobalt base in powder form mixed with an appropriate plastics binder or the like and compressed to the desired cylindrical size and shape. Such permanent magnets are available from Seiko Epson Corporation of Suwa-gun, Nagano-ken, Japan under the general product designation SAM-15R. After formation of the sleeve 80, the sleeve is magnetised to define a circumferentially arranged plurality of eight alternately positioned north and south poles, wherein the number of magnet poles is specifically chosen to be a numerical mis-match relative to the number of armature poles.

Upon supply of electric power to the armature windings 76, under appropriate control as is known, the flux coupling between the armature windings and the magnet sleeve 80 results in rotational driving of the rotor hub. In this regard, the hub 54 beneficially provides an integral portion of the flux path coupling the various magnet poles. This use of the rotor hub 54 as part of the flux path, in combination with the use of eight magnetic poles in a disk drive application, permits the use of high energy rare earth magnets for relatively high driving torque without significant flux leakage externally of the rotor hub. Such prevention of significant flux leakage is, of course, desirable to avoid adverse impact upon disk data surfaces disposed near the rotor hub.

In operation, the rotor hub 54 is rotatably driven smoothly and with relatively low motor cogging. This relatively low cogging characteristic is obtained, notwithstanding the use of the high strength magnet sleeve 80, by means of the numerical mis-match between the armature poles and magnet poles. That is, with a total of eight magnet poles and nine armature poles, the inter-polar alignment between the armature and the magnet precludes any significant torque fluctuations throughout each full revolution of the rotor. Such relatively low cogging operation is further enhanced by forming the magnetic poles on the permanent magnet to be separated by relatively narrow transition bands 81 (Figure 6) of gradually diminishing strength and then reversing in polarity with increasing strength with a band width of about 5°.

In accordance with a further aspect of the spindle motor, a plurality of Hall-effect switches 82 (Figures 3 and 4) are mounted in 120° intervals on an appropriate annular support board 84 at one axial end of the armature, and in a position radially inset slightly from one axial end of the permanent magnet sleeve 80. A flux concentrator ring 85 of an appropriate flux carrying material protrudes axially from the armature to assist in coupling the generated magnetic flux to the Hall-effect switches 82, without requiring additional windings or additional magnets for use therewith. These Hall-effect switches function in known manner to detect and respond to changing motor phases for purposes of controlling motor speed and direction. In this regard, the general operation of Hall-effect switches for controlling commutation of a permanent magnet motor is described in C. C. Vienott, Fractional & Subfractional Horsepower Electric Motors, pages 282 to 283 (3rd ed. 1970).

The rotatably driven rotor hub 54 supports the stack of disks 14 for rotation within the disk drive housing 16. In this regard, the disks 14 are stacked upon a lower outer support flange 86 of the rotor hub 54. The disks 14 are separated from each other by alternating spacer rings 87 of precision height, thereby orientating the disks 14 in a precision spacing for access therebetween of the various heads (Figure 2). An upper clamp ring or member 88 is fastened onto the upper end of the rotor hub 54 by a plurality of screws 90 or the like to compress the stack of disks 14 and related spacer rings 87. Accordingly, when the rotor hub is driven, the stack of disks 14 are rotated as a collective unit.

The rotor hub 54 includes a plurality of relatively soft and preferably resilient shim strips 92 (Figure 4) for maintaining the inner diameter edges 94 (Figure 3) of the individual disks 14 in radially spaced relation from the rotor hub 54. As best shown in Figure 4, the rotor hub 54 includes at least three axially elongated shim strips 92 of a material such as a plastics material e.g. polytetrafluoroethylene or the like and arranged at about 120° intervals about the hub. These shim strips have a thickness of the order of about 0.13 mm (0.005 inch) to ensure initial disk stacking with their inner diameter edges in spaced relation to the hub. With this geometry, during normal anticipated thermal loads encountered during motor operation, thermal size variations of the hub and/or the disks will be insufficient to permit the hub to contact any one of the disks. As a result, lateral shifint of the disks relative to each other is substantially prevented, wherein such lateral shifting could otherwise result in positioning errors during disk drive operation.

The disk drive spindle motor 12 thus provides a relatively stiff and high energy motor mounted directly in the rotary hub of a disk stack. The spindle motor is designed for use in driving up to a maximu number of memory storage disks which be installed into the available vertical size envelope, with rapid disk rotation start up and stable steady state operation at relatively high rotational speed.

## Claims

1. A disk drive spindle motor for rotatably driving a plurality of memory storage disks (14) or the like, said spindle motor comprising: a stator shaft (32); an armature (74,76) carried by said stator shaft and having a plurality of alternate armature poles; a rotor hub (54); and means (40,42) for rotatably supporting said rotor hub from said stator shaft, characterised by a permanent magnet sleeve (80) carried by said rotor hub (54) in magnetic coupled relation with said armature (74, 76), said sleeve having a one piece configuration including a plurality of circumferentially arranged alternate magnetic sleeve poles, whereby said permanent magnet sleeve (80) and said hub (54) are rotatably driven upon supply of electric power to said armature (74,76).

2. A spindle motor as claimed in claim 1 characterised in that the number of armature poles is mismatched relative to the number of said sleeve poles.

3. A spindle motor comprising: a stator shaft (32); an armature (74,76) carried by said stator shaft (32) and defining a plurality of armature poles; a generally cylindrical rotor hub (54) formed from a magnetic flux carrying material; and means (40,42) for rotatably mounting said rotor hub about said stator shaft (32) characterised by a permanent magnet sleeve (80) carried within said rotor hub, said permanent magnet sleeve having a one-piece construction and defining a circumferentially arranged plurality of alternate poles, said poles being provided in a number mis-matched with respect to the number of armature poles.

4. A spindle motor as claimed in any preceding claim, characterised by including a disk drive housing (16) having upper and lower housing portions (18,20), and means (34,36) for securing said stator shaft (32) substantially at opposite ends thereof respectively to said upper and lower housing portions.

5. A disk drive spindle motor characterised by comprising a generally sealed disk drive housing (16) having inter-connected first and second housing members (18,20); a stator shaft (32) having opposite ends secured respectively to said first and second housing members; an armature (74,76) carried by said stator shaft (32) and defining a plurality of armature poles; a rotor hub (54) having a substantially cylindrical shape and being mounted about said armature; means (40,42) for rotatably supporting said rotor hub (54) for rotation relative to said stator shaft (32); and a permanent magnet sleeve (80) having a unitary construction and defining a plurality of circumferentially arranged alternate magnet sleeve poles, said permanent magnet sleeve being mounted within said rotor hub and carried for rotation therewith; in combination with a plurality of memory storage disks (14) each having a central opening formed therein and mounted about said rotor hub (54), and spacer ring means (87) for axially separating said disks (14) in spaced relation in a stack about said rotor hub.

6. A spindle motor as claimed in any preceding claim characterised by including a plurality of axially extending shim strips (92) carried in circumferentially spaced relation about said rotor hub (54), said shim strips, in operation, maintaining inner diameter edges of central openings formed in said disks in spaced relation from said rotor hub.

7. A spindle motor as claimed in claim 6 characterised in that said shim strips (92) are formed from polytetrafluoroethylene.

8. A spindle motor as claimed in claim 6 or 7 characterised in that at least three of said shim strips (92) are provided about said rotor hub in a generally equi-angularly spaced array.

9. A spindle motor as claimed in any preceding claim characterised in that said rotor hub (54) includes means (86,88,90) for supporting a plurality of the memory storage disks (14) in stacked relation.

10. A spindle motor as claimed in any preceding claim characterised in that said rotor hub (54) is formed from magnetic flux carrying material.

11. A spindle motor as claimed in any preceding claim characterised in that said permanent magnet sleeve (80) is formed from a rare earth magnet material.

12. A spindle motor as claimed in claim 11 characterised in that said permanent magnet sleeve (80) includes samarium cobalt.

13. A spindle motor as claimed in any preceding claim characterised in that the number of said armature poles is nine, and the number of sleeve poles is eight.

14. A spindle motor as claimed in any preceding claim characterised in that said poles of said permanent magnet sleeve (80) are separated by transition bands of smoothly changing polarity, each of said transition bands having a band width of at least about 5°.

15. A spindle motor as claimed in any preceding claim characterised by including Hall-effect switch means (82) carried by said stator shaft (32) substantially at one end of said armature (74,76) and at a position substantially radially within one end of said permanent magnet sleeve (80), the flux concentrator ring (85) carried by said stator shaft at a position adjacent said armature in magnetically coupled relation with said Hall-effect switch means.

16. A spindle motor as claimed in any preceding claim characterised in that said means for rotatably supporting said rotor hub comprises a pair of bearing units (40,42) having inner races (44) bonded to said stator shaft (32) substantially at opposite ends thereof, a respective pair of outer races (46) secured to said rotor hub (54), and bearing members (48) for respectively rotatably supporting said outer races relative to said inner races.

17. A spindle motor as claimed in claim 5 or any of claims 6 to 16 when dependent thereon, characterised in that said rotor hub (54) includes a radially enlarged support flange (86) at one end thereof, and a clamp member (88) mounted generally to an opposite end of said rotor hub and co-operating with said spacer ring means (87) and said disks (14) and said support flange to maintain said disks in aligned stacked relation.

18. A spindle motor for a computer disk drive or the like, comprising: a rotor hub (54); and drive means (32) within said rotor hub for rotatably driving said rotor hub; characterised by a plurality of at least three axially extending shim strips (92) mounted onto the exterior of said rotor hub in circumferentially spaced relation, said shim strips being formed from a relatively soft material, and means (86) for supporting at least one memory storage disk (14) having a central opening therein about said rotor hub for rotation therewith, said shim strips (92) maintaining the inner diameter edge of said at least one disk in spaced relation with said rotor hub.

FIG. 1

FIG. 2

FIG. 3

FIG. 4

FIG. 5

FIG. 6